# EUROPEAN PATENT APPLICATION

(11) **EP 4 574 633 A1**
(43) Date of publication of application: **25.06.2025**
(21) Application number: 24219747.3
(22) Date of filing: 13.12.2024
(51) Int. Cl.: B62D 35/00, B60R 17/00, B60R 19/52, B60R 19/18

(54) **CAR WITH BUMPER PROVIDED WITH BUFFERS**

(30) Priority: 21.12.2023 IT 202300027633
(71) Applicant: FERRARI S.p.A., 41100 Modena (IT)
(72) Inventor: FERETTI, Manuel, 41100 MODENA (IT); NARDUCCI, Angelo, 41100 MODENA (IT)
(74) Representative: Studio Torta S.p.A.

(57) **Abstract**

A car has a support frame (2) defining at least part of a lower floor (3) of the car, a passenger compartment (4) projecting upwards from the lower floor (3), and a head-on bumper (9), which is coupled to the support frame (2), and has at least one spoiler (11), a rear buffer (13) mounted behind the spoiler (11), and a front closing shell (12) mounted in front of the spoiler (11); the closing shell (12) having a thickness, which is smaller than a thickness of the spoiler (11) and smaller than a thickness of the rear buffer (13).

## Description

### CROSS-REFERENCE TO RELATED APPLICATIONS

This patent application claims priority from Italian patent application no. 102023000027633 filed on December 21, 2023, the entire disclosure of which is incorporated herein by reference.

### TECHNICAL FIELD

The present invention relates to a car.

### BACKGROUND

In particular, the present invention relates to a car of the type comprising a support frame defining at least part of a lower floor of the car; a passenger compartment mounted on the support frame and projecting upwards from the lower floor; and an engine for moving the car.

The car is further provided with at least one head-on bumper, which is coupled to the support frame, and comprises a central portion, two side spoilers arranged on opposite sides of the central portion, a rear buffer mounted behind each side spoiler, and a front closing shell mounted in front of each side spoiler.

The known cars of the type described above have some drawbacks mainly deriving from the fact that, in case of impact at the side spoilers, the structure of the head-on bumper is incapable of limiting only to the side spoilers the consequent damage, it involves, on the contrary, the damage to further components of the car such as, for example, the headlights, the hood, and the fender, and it does not thus result to be compliant with the regulations of at least some of the countries with the main world markets of the car sector.

### SUMMARY

The object of the present invention is to provide a car which is exempt from the drawbacks set forth above and which is simple and cost-effective to manufacture.

According to the present invention, there is provided a car as claimed in the appended claims.

### BRIEF DESCRIPTION OF THE DRAWINGS

The present invention will now be described with reference to the accompanying drawings, which illustrate a non-limiting embodiment thereof, wherein:
Figure 1 is a schematic perspective view, with parts removed for clarity, of a preferred embodiment of the car of the present invention;
Figures 2 and 3 are two schematic perspective views, with parts removed for clarity, of a detail of the car of Figure 1; and
Figure 4 is a schematic cross-section, with parts removed for clarity, of the detail of Figures 2 and 3.

### DESCRIPTION OF EMBODIMENTS

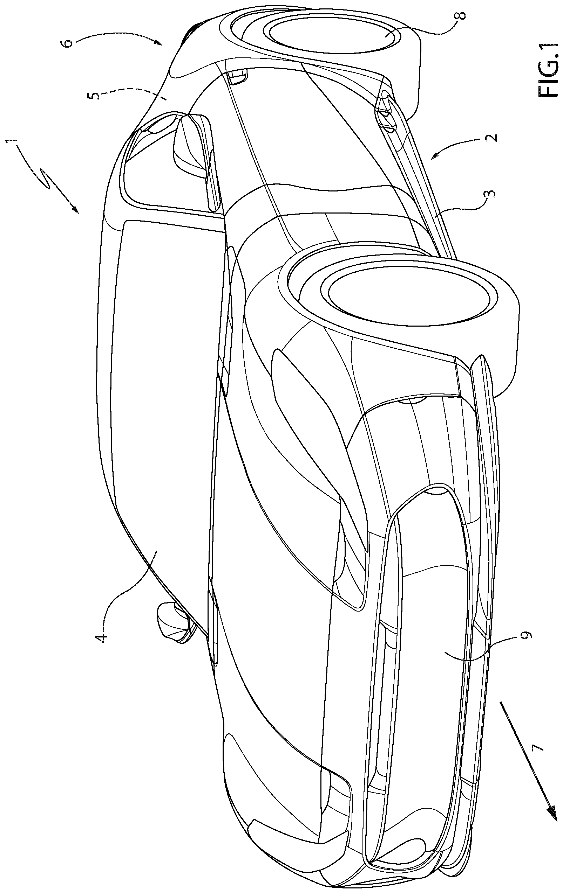

With reference to Figure 1, reference numeral 1 indicates, as a whole, a car, in particular a high-performance sports car, comprising a support frame 2 defining at least part of a lower floor 3 of the car 1, and a passenger compartment 4 mounted on the frame 2 and projecting upwards from the floor 3.

The car 1 further comprises an engine 5 of known type, which is mounted in the centre of a rear zone 6 of the frame 2, in particular parallel to a forward direction 7 of the car 1, and is connected in a known manner to two rear driving wheels 8 of the car 1.

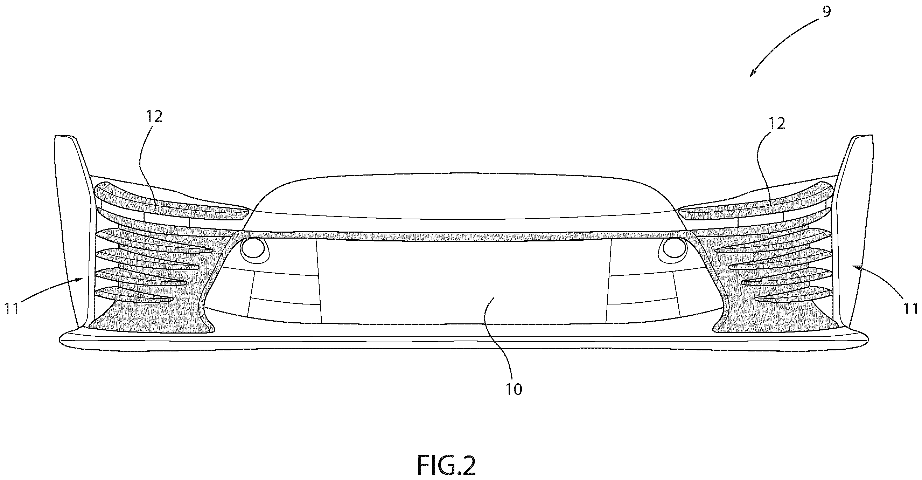

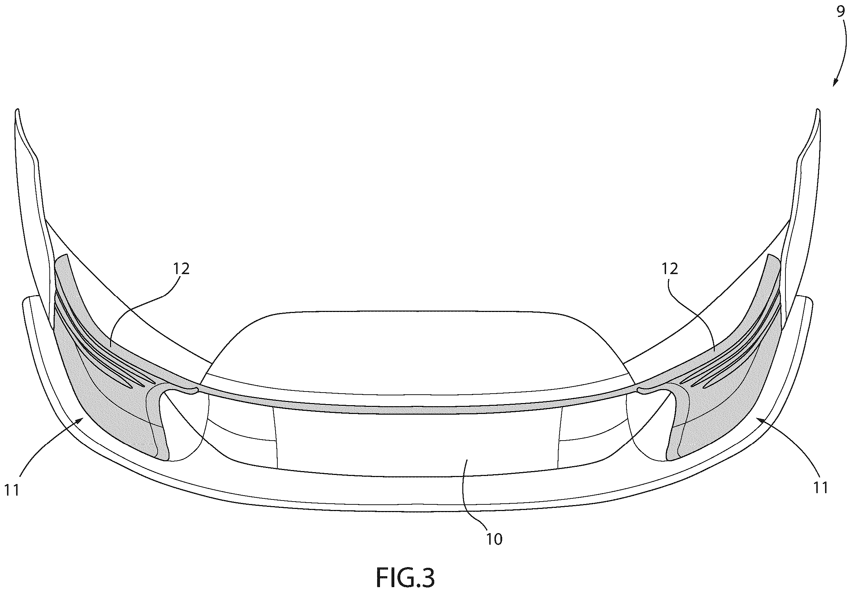

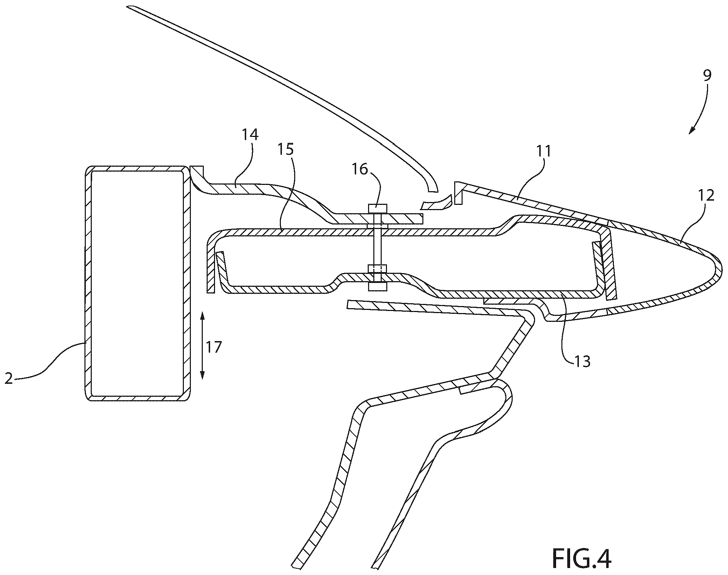

According to what is shown in Figures 2, 3, and 4, the car 1 is provided with at least one head-on bumper 9, which is coupled to the frame 2, is substantially U-shaped, and comprises a central portion 10 provided with two side spoilers 11 obtained on opposite sides of the portion 10.

To this regard, it should be specified that:
the present invention is particularly advantageously applied to the head-on bumpers provided with side spoilers, to which the following discussion will explicitly refer without thereby losing generality, but it is obviously also applicable to head-on bumpers provided with central or anyway positioned spoilers; and
the bumper 9 can be a front bumper or a rear bumper of the car 1.

Each spoiler 11 is closed at the front by a relative front shell 12, which has an aerodynamic profile, is mounted at the front of the spoiler 11, and has a thickness which is smaller than a thickness of the spoiler 11.

Each spoiler 11 is associated with a rear buffer 13, which is mounted behind the shell 12, and has the shape of an elongated bracket.

In this case, the buffer 13 is fixed to the bumper 9, in particular through gluing, and is preferably but not necessarily made of carbon.

The frame 2 comprises, for each spoiler 11, a respective support bracket 14 projecting from the frame 2 towards the spoiler 11, and a respective coupling bracket 15, which is preferably but not necessarily made of aluminium, and is interposed between the buffer 13 and the bracket 14.

The buffer 13 and the brackets 14 and 15 are connected to one another through at least one fastening screw 16 mounted in a substantially vertical locking direction 17.

According to a variation not shown, the buffer 13 is fixed only to the brackets 14 and 15 through the fastening screws 16 and is not fixed to the bumper 9.

With regard to what set forth above, it should be specified that:
the thickness of the front shell 12 is smaller than the thickness of the rear buffer 13; and
the thickness of the side spoiler 11 is smaller than the thickness of the rear buffer 13.

Consequently, in case of impact of the side spoiler 11 with an obstacle (not shown) at a relatively reduced speed, the shell 12 is damaged in a relatively simple and rapid manner due to its relatively reduced thickness, whereas the obstacle (not illustrated) is locked by the rear buffer 13 so as to prevent it from sliding below and/or above the rear buffer 13 and avoid the damage to further components of the car 1 such as, for example, the headlights, the hood, and the fender.

In this manner, when the obstacle (not shown) is defined by a movable member of a test apparatus configured to check the behaviour of the head-on bumper 9, the car 1 is compliant with the regulations of the countries characterized by the main world markets of the car sector.

## Claims

1. A car comprising a support frame (2) defining at least part of a lower floor (3) of the car; a passenger compartment (4) projecting upwards from the lower floor (3); and a head-on bumper (9), which is coupled to the support frame (2) and comprises, in turn, at least one spoiler (11), a rear buffer (13) mounted behind the spoiler (11) and a front closing shell (12) mounted in front of the spoiler (11); and **characterized in that** each closing shell (12) has a thickness, which is smaller than a thickness of the relative spoiler (11) and smaller than a thickness of the relative rear buffer (13).

2. The car according to claim 1, wherein the thickness of the rear buffer (13) is greater than the thickness of the spoiler (11).

3. The car according to claim 1 or 2, wherein the rear buffer (13) is at least partly made of carbon.

4. The car according to any one of the preceding claims, wherein the rear buffer (13) is fixed to the spoiler (11), in particular through gluing.

5. The car according to any one of the preceding claims and further comprising fixing means (16) to lock the rear buffer (13) on the support frame (2) in a substantially vertical locking direction (17).

6. The car according to claim 5, wherein the fixing means (16) comprise at least one substantially vertical fastening screw.

7. The car according to any one of the preceding claims, wherein the support frame (2) comprises a coupling bracket (15) fixed to the rear buffer (13).

8. The car according to claim 7, wherein the coupling bracket (15) is made of aluminium.

9. The car according to any one of the preceding claims, wherein the head-on bumper (9) is a front bumper or a rear bumper.

10. The car according to any one of the preceding claims, wherein the spoiler (11) is a side spoiler or a central spoiler.
